# FASCICULE DE BREVET EUROPEEN

(11) **EP 3 231 745 B1**
(45) Date de publication et mention de la délivrance du brevet: **12.09.2018**
(21) Numéro de dépôt: 17164183.0
(22) Date de dépôt: 31.03.2017
(51) Int. Cl.: B65G 43/08, B65G 47/64, B65G 15/02

(54) **INSTALLATION DE TRANSFERT D'OBJETS ENTRE DEUX CONVOYEURS ET PROCEDE DE GESTION DE FLUX DESDITS OBJETS**
ANLAGE ZUM TRANSFER VON GEGENSTÄNDEN ZWISCHEN ZWEI FLIESSBÄNDERN, UND VERFAHREN ZUR STEUERUNG DES FLUSSES DIESER GEGENSTÄNDE
FACILITY FOR TRANSFERRING OBJECTS BETWEEN TWO CONVEYORS AND METHOD FOR MANAGING THE FLOW OF SAID OBJECTS

(30) Priorité: 12.04.2016 FR 1653201
(43) Date de publication de la demande: 18.10.2017
(73) Titulaire: TechniBiscuit, 44115 Haute-Goulaine (FR)
(72) Inventeur: FLEURY, Eric, 44115 HAUTE-GOULAINE (FR)
(74) Mandataire: Le Cloirec, Claudine

(56) Documents cités:
- EP-A1- 2 772 457
- WO-A1-2012/160304
- US-A1- 2010 072 025

## Description

La présente invention concerne une installation de transfert d'objets, au moyen de convoyeurs.
Elle concerne plus particulièrement une installation de transfert d'objets du type comprenant plusieurs convoyeurs, tels :
- qu'un premier convoyeur dit convoyeur amont, présentant une première surface de transport, suivant une première direction de transport,
- un deuxième convoyeur dit convoyeur aval présentant une deuxième surface de transport suivant une deuxième direction de transport,
- et un troisième convoyeur, dénommé convoyeur de transfert, présentant une surface de transport de forme courbe apte à transférer le ou lesdits objets de la première surface de transport à la deuxième surface de transport.
En effet, pour des raisons d'encombrement en usine, les convoyeurs amont et aval peuvent être par exemple disposés parallèlement l'un à l'autre, en ménageant une trajectoire des objets selon des directions de transport opposées (c'est-à-dire faisant entre elles un angle de 180°), le convoyeur de transfert présentant une courbure à 180° effectue le retournement de la trajectoire des objets entre le convoyeur amont et le convoyeur aval. C'est le cas notamment du dispositif décrit dans le document WO 2012/160304, le convoyeur de transfert étant monté mobile dans la direction de transport des convoyeurs amont et aval. Il existe également des convoyeurs de transfert présentant une courbure à 90°, les convoyeurs amont et aval étant disposés perpendiculairement l'un par rapport à l'autre. Le document WO 2012/160304 décrit le préambule de la revendication 1. De telles installations sont connues, notamment pour le transport de biscuits, en particulier entre le four de cuisson et le poste de conditionnement desdits biscuits. Toutefois le transport de flux d'objets sur des convoyeurs à bande amont et aval.

A cet effet la présente invention concerne une installation de transfert d'un ou plusieurs objets, comprenant un premier convoyeur dit convoyeur amont avec une première surface de transport, suivant une première direction de transport, un deuxième convoyeur dit convoyeur aval présentant une deuxième surface de transport suivant une deuxième direction de transport, et un troisième convoyeur, dénommé convoyeur de transfert, présentant une surface de transport de forme courbe apte à transférer le ou lesdits objets de la première surface de transport à la deuxième surface de transport ; cette installation est caractérisée en ce qu'elle est équipée d'au moins un capteur de détection du positionnement du ou desdits objets sur au moins l'une des surfaces de transport des convoyeurs amont ou aval, et en ce que le convoyeur de transfert est monté mobile transversalement à la direction de transport d'au moins un des convoyeurs amont ou aval, en vue de restaurer, en cas de positionnement erroné d'un ou de plusieurs objets sur la surface de transport du convoyeur amont ou aval par rapport à l'un des bords latéraux du convoyeur amont ou aval, un positionnement correct du ou des objets sur la surface de transport dudit convoyeur aval par rapport à l'un des bords latéraux du convoyeur aval.

Ainsi lorsque ledit capteur détecte un flux d'objets positionnés dans une zone trop proche du bord latéral du convoyeur amont ou aval, il commande le déplacement du convoyeur de transfert transversalement à la direction de transport de l'un ou l'autre de ces convoyeurs de telle manière à restaurer une trajectoire correcte dudit flux d'objets sur le convoyeur aval. A cet effet ledit convoyeur de transfert est avantageusement monté sur un chariot apte à se déplacer transversalement à la direction de transport d'au moins un des convoyeurs amont ou aval.

Une telle installation, qui ne comporte pas d'éléments de guidage à la surface des convoyeurs, présente l'avantage de ne pas être tributaire du format des objets transportés sur les convoyeurs. Elle n'occasionne aucun bourrage si les objets n'ont pas tous le format requis.

être des cellules optiques sur seuils ou par analyse d'image, reliées à un dispositif de pilotage du déplacement du convoyeur de transfert.

La présente invention concerne également un procédé de gestion de flux d'objets transportés d'un premier convoyeur dit convoyeur amont A avec une première surface de transport, suivant une première direction de transport, vers un deuxième convoyeur dit convoyeur aval présentant une deuxième surface de transport suivant une deuxième direction de transport, par l'intermédiaire d'un troisième convoyeur, dénommé convoyeur de transfert, présentant une surface de transport de forme courbe transférant le ou lesdits objets de la première surface de transport à la deuxième surface de transport, ledit procédé étant mis en oeuvre au moyen de l'installation décrite ci-dessus permettant de restaurer, en cas de positionnement erroné d'un ou de plusieurs objets sur la surface de transport du convoyeur amont ou aval par rapport à l'un des bords latéraux du convoyeur amont ou aval, un positionnement correct du ou des objets sur la surface de transport dudit convoyeur aval par rapport à l'un des bords latéraux du convoyeur aval.

L'invention sera bien comprise à la lecture de la description suivante d'exemples de réalisation, en référence aux dessins annexés, dans lesquels :
- la figure 1 représente une vue de dessus d'une installation selon l'art antérieur avec un convoyeur de transfert à 180° ;
- la figure 2 représente une vue de dessus d'une installation selon un premier mode de réalisation de l'invention avec un convoyeur de transfert à 180° ;
- la figure 3 représente une vue de dessus d'une installation selon un second mode de réalisation de l'invention avec un convoyeur de transfert à 180° ;
- la figure 4 représente une vue de dessus d'une installation selon un premier mode de réalisation de l'invention avec un convoyeur de transfert à 90° ;
- la figure 5 représente une vue de dessus d'une installation selon un second mode de réalisation de l'invention avec un convoyeur de transfert à 90° ;
- la figure 6 est une vue en perspective de l'installation selon le premier mode de réalisation de l'invention avec un convoyeur de transfert à 180° ;
- les figures 7 et 8 sont des vues en perspective de l'installation selon le

La détection (du positionnement correct ou non des objets) peut s'effectuer en amont du convoyeur de transfert courbe, ou immédiatement en aval de celui-ci.

Selon un premier mode de réalisation de l'invention, le capteur est placé à proximité du convoyeur amont, et est relié à un dispositif de pilotage du déplacement du convoyeur de transfert.

Selon un second mode de réalisation de l'invention, le capteur est placé à proximité du convoyeur aval et est relié à un dispositif de pilotage du déplacement du convoyeur de transfert.

En variante des capteurs peuvent être placés à la fois à proximité du convoyeur amont et à proximité du convoyeur aval, et l'opérateur peut décider de mettre en fonctionnement l'un ou l'autre de ces capteurs.

De préférence, le ou les capteurs sont disposés au-dessus de l'extrémité, jouxtant le convoyeur de transfert, de la première surface de transport et/ou au-dessus de l'extrémité, jouxtant le convoyeur de transfert, de la deuxième surface de transport.

L'installation peut être telle que les convoyeurs amont et aval sont disposés parallèlement l'un par rapport à l'autre, les première et deuxième directions de transport formant entre elles un angle de 180°.

Ou bien l'installation est telle que les convoyeurs amont et aval sont disposés orthogonalement l'un par rapport à l'autre, les première et deuxième directions de transport formant entre elles un angle de 90°. Dans ce cas, l'un des convoyeurs amont ou aval est avantageusement monté solidaire du convoyeur de transfert.

Les capteurs mis en oeuvre dans l'installation de la présente invention peuvent être des cellules optiques sur seuils ou par analyse d'image, reliées à un dispositif de pilotage du déplacement du convoyeur de transfert.

La présente invention concerne également un procédé de gestion de flux d'objets transportés d'un premier convoyeur dit convoyeur amont A avec une première surface de transport, suivant une première direction de transport, vers un deuxième convoyeur dit convoyeur aval présentant une deuxième surface de transport suivant une deuxième direction de transport, par l'intermédiaire d'un troisième convoyeur, dénommé convoyeur de transfert, présentant une surface de transport de forme courbe transférant le ou lesdits objets de la première surface de transport à la deuxième surface de transport, ledit procédé étant mis en oeuvre au moyen de l'installation décrite ci-dessus permettant de restaurer, en cas de mauvais positionnement d'un ou de plusieurs objets sur la surface de transport du convoyeur amont ou aval, un positionnement correct du ou des objets sur la surface de transport dudit convoyeur aval.

L'invention sera bien comprise à la lecture de la description suivante d'exemples de réalisation, en référence aux dessins annexés, dans lesquels :

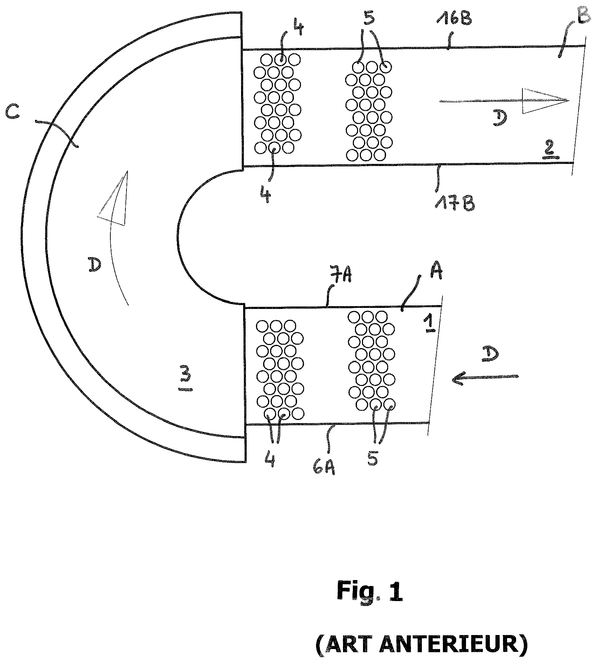

- la figure 1 représente une vue de dessus d'une installation selon l'art antérieur avec un convoyeur de transfert à 180° ;

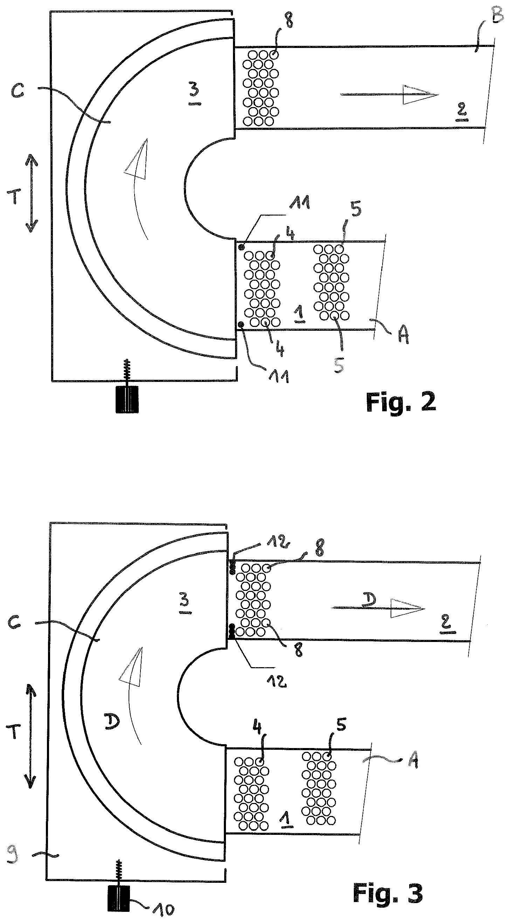

- la figure 2 représente une vue de dessus d'une installation selon un premier mode de réalisation de l'invention avec un convoyeur de transfert à 180° ;
- la figure 3 représente une vue de dessus d'une installation selon un second mode de réalisation de l'invention avec un convoyeur de transfert à 180° ;

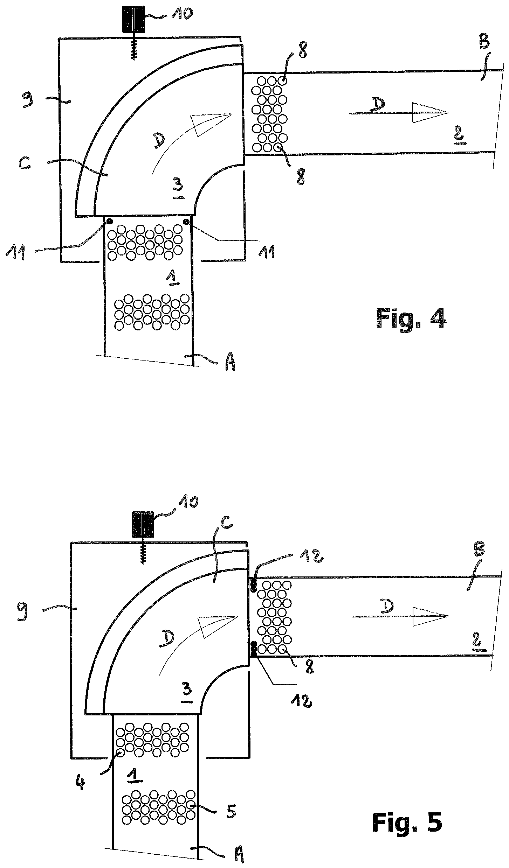

- la figure 4 représente une vue de dessus d'une installation selon un premier mode de réalisation de l'invention avec un convoyeur de transfert à 90° ;
- la figure 5 représente une vue de dessus d'une installation selon un second mode de réalisation de l'invention avec un convoyeur de transfert à 90° ;

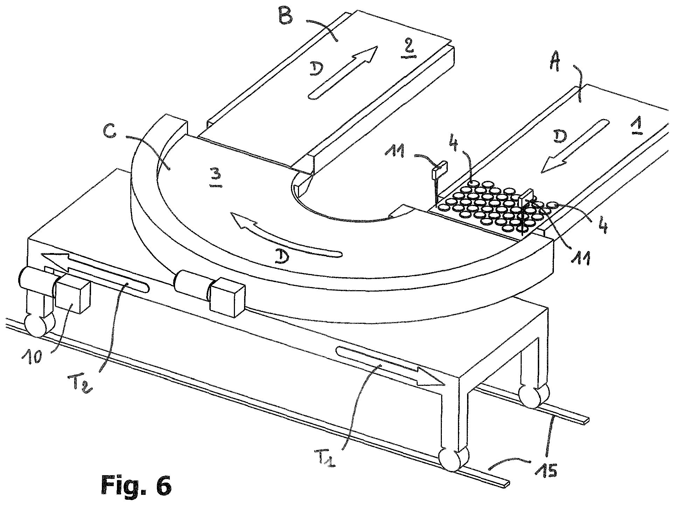

- la figure 6 est une vue en perspective de l'installation selon le premier mode de réalisation de l'invention avec un convoyeur de transfert à 180° ;

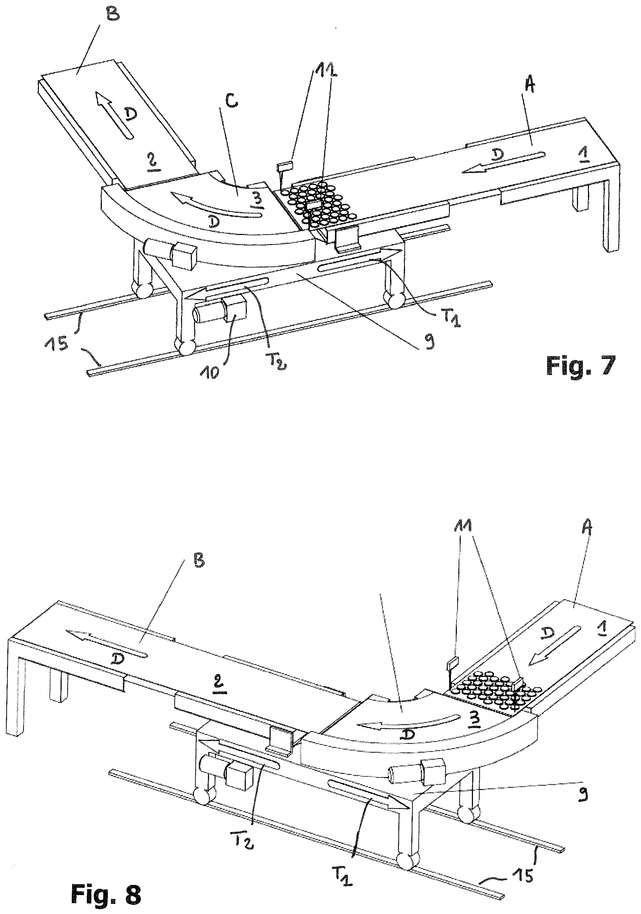

- les figures 7 et 8 sont des vues en perspective de l'installation selon le premier mode de réalisation de l'invention avec un convoyeur de transfert à 90° : sur la figure 7 le convoyeur amont est solidaire du convoyeur de transfert, sur la figure 8 le convoyeur aval est solidaire du convoyeur de transfert.

En se référant aux figures, est tout d'abord présentée en figure 1 une installation de transfert d'objets 4, 5 de l'art antérieur comprenant trois convoyeurs à bande transporteuse, plus particulièrement et selon le sens de déplacement desdits objets : un convoyeur amont A ménageant une surface de transport 1 se prolongeant par un convoyeur courbe C ménageant une surface de transport 3, lui-même prolongé par un convoyeur aval B ménageant une surface de transport 2. Le convoyeur courbe C aussi dénommé convoyeur de transfert, est apte à transférer le ou lesdits objets de la première surface de transport 1 à la deuxième surface de transport 2, des deux convoyeurs respectivement amont et aval étant, dans l'exemple présenté sur cette figure 1, disposés parallèlement l'un par rapport à l'autre.

Les objets, dont le flux suit la trajectoire schématisée par la flèche D, sont transportés ici selon 8 rangées de 3 objets. Le groupe d'objets 4 déviant de sa trajectoire se trouve proche du bord gauche 6A (dans le sens du déplacement D) de la bande transporteuse du convoyeur amont A et se retrouve inchangé dans une zone proche du bord gauche 16B (dans le sens du déplacement D) de la bande transporteuse du convoyeur aval B. De même, si le groupe d'objets 5 dévie de sa trajectoire et se trouve proche du bord droit 7A (dans le sens du déplacement D) de la bande transporteuse du convoyeur amont A, ce groupe d'objets 5 se retrouve inchangé dans une zone proche du bord droit 17B (dans le sens du déplacement D) de la bande transporteuse du convoyeur aval B.

Il est difficile d'intervenir directement sur la surface de la bande transporteuse du convoyeur : en effet toute correction qui pourrait être apportée à cette surface pour « redresser » le flux d'un groupe d'objets vers le centre (par exemple pour le groupe d'objets 4) aggrave le défaut pour un autre groupe d'objets (par exemple le groupe d'objets 5).

Selon la solution apportée par la présente invention et schématisée sur les figures 2 à 8, l'installation comporte des capteurs sous forme de cellules 11 ou 12 détectrices du positionnement des objets à la surface du convoyeur amont A ou du convoyeur aval B.

Les cellules 11 sont avantageusement disposées au-dessus de l'extrémité, jouxtant le convoyeur de transfert C, de la première surface 1 de transport afin de détecter tout positionnement erroné des objets par rapport à l'un des bords latéraux 6A, 7A de la bande transporteuse du convoyeur amont A (comme schématisé sur les figures 2, 4 6, 7 et 8) avant leur entrée sur la surface 3 de la bande transporteuse du convoyeur C de transfert.

Les cellules 12 peuvent aussi, comme schématisé sur les figures 3 et 5, être disposées au-dessus de l'extrémité, jouxtant le convoyeur de transfert C, de la deuxième surface 2 de transport, afin de détecter tout positionnement erroné des objets par rapport à l'un des bords latéraux 16B, 17B de la bande transporteuse du convoyeur aval B lors de leur entrée sur la surface 2 de la bande transporteuse dudit convoyeur aval B.

De préférence les paires de cellules 11 ou 12 sont placées selon un écartement supérieur à la largeur du flux d'objets. Dès que l'une d'elles détecte un objet, c'est-à-dire un objet dépassant de la trajectoire souhaitée, l'information est envoyée au moteur 10 qui actionne le déplacement d'un chariot 9 sur lequel est positionné le convoyeur de transfert C. Ce chariot est monté mobile sur des rails 15 disposés perpendiculairement aux deux convoyeurs A et B (lorsque ceux-ci sont parallèles entre eux : cas des figures 2, 3 et 6). Ainsi le convoyeur de transfert C et donc la surface 3 de transfert est déplacé selon les flèches T, permettant de rétablir le flux d'objets 8 selon la trajectoire souhaitée (par exemple plus centrée) sur la surface 2 de la bande transporteuse du convoyeur aval B. Cet exemple correspond au cas où les deux convoyeurs amont et aval sont parallèles et le convoyeur de transfert C forme une courbe de 180°.

Dans le cas où les deux convoyeurs amont et aval sont disposés orthogonalement l'un à l'autre, le convoyeur de transfert forme une courbe à 90° : cas schématisé sur les figures 4, 5, 7 et 8. Dans ce cas, deux situations peuvent être envisagées :
- le convoyeur amont peut être monté solidaire du convoyeur C (figure 7), les rails 15 sont parallèles à ce convoyeur amont A et le déplacement de l'ensemble convoyeur de transfert-convoyeur amont A s'effectue transversalement au convoyeur aval B ; ou bien
- le convoyeur aval B peut être monté solidaire du convoyeur C (figure 8), les rails 15 sont parallèles à ce convoyeur aval B et le déplacement de l'ensemble convoyeur de transfert-convoyeur aval B s'effectue transversalement au convoyeur amont A.

Ces déplacements s'effectuent selon les flèches T1 ou T2 en réponse à la détection des cellules 11 (ou 12 non représentées) et du signal envoyé au moteur 10.

On voit donc que l'installation selon la présente invention permet une gestion automatisée des flux de produits, sans bourrage, sans nécessiter de couloirs de guidage des produits, permettant de corriger très rapidement les déviations de flux.

De plus, une telle installation est adaptable très rapidement à des variations de dimensions des objets transportés sur ces convoyeurs, et n'est pas tributaire de la cadence de transport des objets. L'installation ne connaît pas non plus de limite quant à la largeur du flux transporté.

## Revendications

1. Installation de transfert d'un ou plusieurs objets, comprenant un premier convoyeur dit convoyeur amont (A) avec une première surface (1) de transport, suivant une première direction de transport, un deuxième convoyeur dit convoyeur aval (B) présentant une deuxième surface (2) de transport suivant une deuxième direction de transport, et un troisième convoyeur (C), dénommé convoyeur de transfert, présentant une surface (3) de transport de forme courbe apte à transférer le ou lesdits objets de la première surface de transport à la deuxième surface de transport,
**caractérisée en ce que** l'installation est équipée d'au moins un capteur (11 ; 12) de détection du positionnement du ou desdits objets sur au moins l'une des surfaces de transport des convoyeurs amont ou aval,
et **en ce que** le convoyeur de transfert (C) est monté mobile transversalement à la direction de transport d'au moins un des convoyeurs amont ou aval, en vue de restaurer, en cas de positionnement erroné d'un ou de plusieurs objets sur la surface de transport du convoyeur amont (A) ou aval (B) par rapport à l'un des bords latéraux du convoyeur amont (A) ou aval (B), un positionnement correct du ou des objets sur la surface de transport dudit convoyeur aval (B) par rapport à l'un des bords latéraux du convoyeur aval (B).

2. Installation selon la revendication 1,
**caractérisée en ce que** ledit convoyeur de transfert est monté sur un chariot (9) apte à se déplacer transversalement à la direction de transport d'au moins un des convoyeurs amont (A) ou aval (B).

3. Installation selon l'une quelconque des revendications précédentes,
**caractérisée en ce qu'**un capteur (11) de détection du positionnement du ou desdits objets sur au moins une surface de transport est placé à proximité du convoyeur amont (A), et est relié à un dispositif de pilotage du déplacement du convoyeur de transfert (C).

4. Installation selon l'une quelconque des revendications précédentes,
**caractérisée en ce qu'**un capteur (12) de détection du positionnement du ou desdits objets sur au moins une surface de transport est placé à proximité du convoyeur aval (B) et est relié à un dispositif de pilotage du déplacement du convoyeur de transfert (C).

5. Installation selon l'une quelconque des revendications précédentes,
**caractérisée en ce que** les convoyeurs amont (A) et aval (B) sont disposés parallèlement l'un par rapport à l'autre, les première et deuxième directions de transport formant entre elles un angle de 180°.

6. Installation selon l'une quelconque des revendications 1 à 4,
**caractérisée en ce que** les convoyeurs amont (A) et aval (B) sont disposés orthogonalement l'un par rapport à l'autre, les première et deuxième directions de transport formant entre elles un angle de 90°.

7. Installation selon la revendication 6,
**caractérisée en ce que** l'un des convoyeurs amont (A) ou aval (B) est monté solidaire du convoyeur de transfert (C).

8. Installation selon l'une quelconque des revendications précédentes,
**caractérisée en ce que** le ou les capteurs (11, 12) sont des cellules optiques sur seuils ou par analyse d'image, reliées à un dispositif de pilotage du déplacement du convoyeur de transfert (C).

9. Installation selon l'une quelconque des revendications précédentes,
**caractérisée en ce que** le ou les capteurs sont disposés au-dessus de l'extrémité, jouxtant le convoyeur de transfert (C), de la première surface de transport et/ou au-dessus de l'extrémité, jouxtant le convoyeur de transfert (C), de la deuxième surface de transport.

10. Procédé de gestion de flux d'objets transportés d'un premier convoyeur dit convoyeur amont (A) avec une première surface (1) de transport, suivant une première direction de transport, vers un deuxième convoyeur dit convoyeur aval (B) présentant une deuxième surface (2) de transport suivant une deuxième direction de transport, par l'intermédiaire d'un troisième convoyeur (C), dénommé convoyeur de transfert, présentant une surface de transport de forme courbe transférant le ou lesdits objets de la première surface de transport à la deuxième surface de transport,
**caractérisé en ce que** ledit procédé est mis en oeuvre au moyen de l'installation selon l'une des revendications précédentes permettant de restaurer, en cas de positionnement erroné d'un ou de plusieurs objets sur la surface de transport du convoyeur amont (A) ou aval (B) par rapport à l'un des bords latéraux du convoyeur amont (A) ou aval (B), un positionnement correct du ou des objets sur la surface de transport dudit convoyeur aval (B) par rapport à l'un des bords latéraux du convoyeur aval (B).

## Patentansprüche

1. Anlage zum Transfer von einem oder mehreren Objekten, umfassend ein erstes Fließband, bezeichnet als vorgelagertes Fließband (A), mit einer ersten Transportfläche (1) gemäß einer ersten Transportrichtung, ein zweites Fließband, bezeichnet als nachgelagertes Fließband (B), aufweisend eine zweite Transportfläche (2) gemäß einer zweiten Transportrichtung, und ein drittes Fließband (C), bezeichnet als Transferfließband, aufweisend eine gekrümmte Transportfläche (3), die imstande ist, das oder die Objekte von der ersten Transportfläche auf die zweite Transportfläche zu übertragen,
**dadurch gekennzeichnet, dass** die Anlage mit mindestens einem Detektionssensor (11; 12) der Positionierung des oder der Objekte auf mindestens einer der Transportflächen des vorgelagerten oder nachgelagerten Fließbands ausgestattet ist,
und dass das Transferfließband (C) zur Transportrichtung von mindestens einem des vorgelagerten oder nachgelagerten Fließbands transversal beweglich montiert ist, um bei einer fehlerhaften Positionierung von einem oder mehreren Objekten auf der Transportfläche des vorgelagerten (A) oder nachgelagerten (B) Fließbands in Bezug auf einen der Seitenränder des vorgelagerten (A) oder nachgelagerten (B) Fließbands eine korrekte Positionierung des oder der Objekte auf der Transportfläche des nachgelagerten Fließbands (B) in Bezug auf einen der Seitenränder des nachgelagerten Fließbands (B) wiederherzustellen.

2. Anlage nach Anspruch 1,
**dadurch gekennzeichnet, dass** das Transferfließband auf einem Wagen (9) montiert ist, der imstande ist, sich transversal zur Transportrichtung von mindestens einem des vorgelagerten (A) oder nachgelagerten (B) Fließbands zu verlagern.

3. Anlage nach einem der vorangehenden Ansprüche,
**dadurch gekennzeichnet, dass** ein Detektionssensor (11) der Positionierung des oder der Objekte auf mindestens einer Transportfläche in der Nähe des vorgelagerten Fließbands (A) platziert und mit einer Steuervorrichtung der Verlagerung des Transferfließbands (C) verbunden ist.

4. Anlage nach einem der vorangehenden Ansprüche,
**dadurch gekennzeichnet, dass** ein Detektionssensor (12) der Positionierung des oder der Objekte auf mindestens einer Transportfläche in der Nähe des nachgelagerten Fließbands (B) platziert und mit einer Steuervorrichtung der Verlagerung des Transferfließbands (C) verbunden ist.

5. Anlage nach einem der vorangehenden Ansprüche,
**dadurch gekennzeichnet, dass** das vorgelagerte (A) und nachgelagerte (B) Fließband parallel zueinander angeordnet sind, wobei die erste und zweite Transportrichtung untereinander einen Winkel von 180° bilden.

6. Anlage nach einem der vorangehenden Ansprüche 1 bis 4,
**dadurch gekennzeichnet, dass** das vorgelagerte (A) und nachgelagerte (B) Fließband orthogonal zueinander angeordnet sind, wobei die erste und zweite Transportrichtung untereinander einen Winkel von 90° bilden.

7. Anlage nach Anspruch 6,
**dadurch gekennzeichnet, dass** eins von dem vorgelagerten (A) oder nachgelagertem (B) Fließband mit dem Transferfließband (C) fest verbunden montiert ist.

8. Anlage nach einem der vorangehenden Ansprüche,
**dadurch gekennzeichnet, dass** der oder die Sensoren (11, 12) optische Schwellen- oder Bildanalysezellen sind, die mit einer Steuervorrichtung der Verlagerung des Transferfließbands (C) verbunden sind.

9. Anlage nach einem der vorangehenden Ansprüche,
**dadurch gekennzeichnet, dass** der oder die Sensoren oberhalb des Endes, welches das Transferfließband (C) säumt, der ersten Transportfläche und/oder oberhalb des Endes, welches das Transferfließband (C) säumt, der zweiten Transportfläche angeordnet sind.

10. Verfahren für das Flussmanagement von Objekten, die von einem ersten Fließband, bezeichnet als vorgelagertes Fließband (A), mit einer ersten Transportfläche (1) gemäß einer ersten Transportrichtung zu einem zweiten Fließband, bezeichnet als nachgelagertes Fließband (B), aufweisend eine zweite Transportfläche (2), gemäß einer zweiten Transportrichtung mittels eines dritten Fließbands (C), bezeichnet als Transferfließband, aufweisend eine gekrümmte Transportfläche, welches das oder die Objekte von der ersten Transportfläche auf die zweite Transportfläche überträgt, transportiert werden,
**dadurch gekennzeichnet, dass** das Verfahren mit Hilfe einer Anlage nach einem der vorangehenden Ansprüche durchgeführt wird, die erlaubt, bei einer fehlerhaften Positionierung von einem oder mehreren Objekten auf der Transportfläche des vorgelagerten (A) oder nachgelagerten (B) Fließbands in Bezug auf einen der Seitenränder des vorgelagerten (A) oder nachgelagerten (B) Fließbands eine korrekte Positionierung des oder der Objekte auf der Transportfläche des nachgelagerten Fließbands (B) in Bezug auf einen der Seitenränder des nachgelagerten Fließbands (B) wiederherzustellen.

## Claims

1. A facility for transferring one or several objects, comprising a first conveyor called upstream conveyor (A) with a first transport surface (1), in first transport direction, a second conveyor called downstream conveyor (B) having a second transport surface (2), in a second transport direction, and a third conveyor (C), called transfer conveyor, having a curved transport surface (3) able to transfer said object(s) from the first transport surface to the second transport surface,
**characterized in that** the facility is equipped with at least one sensor (11; 12) for detecting the position of said object(s) on at least one of the transport surfaces of the upstream or downstream conveyors,
and **in that** the transfer conveyor (C) is mounted movable transversely to the transport direction of at least one of the upstream or downstream conveyors, in order to restore, in case of incorrect positioning of one or several objects on the transport surface of the upstream (A) or downstream (B) conveyor relative to one of the lateral edges of the upstream (A) or downstream (B) conveyor, a correct positioning of the object(s) on the transport surface of said downstream conveyor (B) relative to one of the lateral edges of the downstream conveyor (B).

2. The facility according to claim 1,
**characterized in that** said transfer conveyor is mounted on a carriage (9) able to move transversely to the transport direction of at least one of the upstream (A) or downstream (B) conveyors.

3. The facility according to any one of the preceding claims,
**characterized in that** a sensor (11) for detecting the positioning of said object(s) on at least one transport surface is placed near the upstream conveyor (A), and is connected to a device for controlling the movement of the transfer conveyor (C).

4. The facility according to any one of the preceding claims,
**characterized in that** a sensor (12) for detecting the position of said object(s) on at least one transport surface is placed near the downstream conveyor (B) and is connected to a device for controlling the movement of the transfer conveyor (C).

5. The facility according to any one of the preceding claims,
**characterized in that** the upstream (A) and downstream (B) conveyors are positioned parallel to one another, the first and second transport directions forming an angle of 180° between them.

6. The facility according to any one of claims 1 to 4,
**characterized in that** the upstream (A) and downstream (B) conveyors are positioned orthogonally relative to one another, the first and second transport directions forming an angle of 90° between them.

7. The facility according to claim 6,
**characterized in that** one of the upstream (A) or downstream (B) conveyors is mounted secured to the transfer conveyor (C).

8. The facility according to any one of the preceding claims,
**characterized in that** the sensor(s) (11, 12) are threshold or image analysis optical cells, connected to a device for controlling the movement of the transfer conveyor (C).

9. The facility according to any one of the preceding claims,
**characterized in that** the sensor(s) are positioned above the end, adjacent to the transfer conveyor (C), of the first transport surface and/or above the end, adjacent to the transfer conveyor (C), of the second transport surface.

10. A method for managing a flow of objects transported from a first conveyor called upstream conveyor (A) with a first transport surface (1), in a first transport direction, toward a second conveyor called downstream conveyor (B) having a second transport surface (2), in a second transport direction, via a third conveyor (C), called transfer conveyor, having a curved transport surface transferring said object(s) from the first transport surface to the second transport surface,
**characterized in that** said method is carried out using the facility according to one of the preceding claims making it possible to restore, in case of incorrect positioning of one or several objects on the transport surface of the upstream (A) or downstream (B) conveyor relative to one of the lateral edges of the upstream (A) or downstream (B) conveyor, correct positioning of the object(s) on the transport surface of said downstream conveyor (B) relative to one of the lateral edges of the downstream conveyor (B).
